# EUROPÄISCHE PATENTSCHRIFT

(11) **EP 4 641 247 B1**
(45) Veröffentlichungstag und Bekanntmachung des Hinweises auf die Patenterteilung: **05.08.2026**
(21) Anmeldenummer: 25153786.6
(22) Anmeldetag: 24.01.2025
(51) Int. Cl.: G01S 7/282, G01S 7/35, G01S 7/41, G01S 13/86, G01S 13/931, G01S 13/34

(54) **RADARSENSORANORDNUNG UND KRAFTFAHRZEUG**
RADAR SENSOR ARRANGEMENT AND MOTOR VEHICLE
ENSEMBLE CAPTEUR RADAR ET VÉHICULE AUTOMOBILE

(30) Priorität: 25.04.2024 DE 102024111673
(43) Veröffentlichungstag der Anmeldung: 29.10.2025
(60) Teilanmeldung: 26151338.6
(73) Patentinhaber: HUF Hülsbeck & Fürst GmbH & Co. KG, 42551 Velbert (DE)
(72) Erfinder: Schindler, Mirko, 42549 Velbert (DE); Wehner, Philipp, 45879 Gelsenkirchen (DE); Leib, Steffen, 40885 Ratingen (DE)
(74) Vertreter: Zenz Patentanwälte Partnerschaft mbB

(56) Entgegenhaltungen:
- EP-A1- 4 361 677
- WO-A1-2021/058449
- JP-B2- 3 368 874

## Beschreibung

Die Erfindung betrifft eine Radarsensoranordnung zur Erkennung von Objekten. Die Erfindung bezieht sich außerdem auf ein Kraftfahrzeug, welches eine Radarsensoranordnung enthält.

Aus der EP 4 361 677 A1 ist eine Radarsensoranordnung bekannt.

Aus der WO 2021/058449 A1 geht ein Radarsensorsystem hervor.

Die Radartechnologie ist seit dem frühen 20. Jahrhundert bekannt. Sie beruht auf dem Prinzip, elektromagnetische Wellen auszusenden, das Echo der ausgesendeten elektromagnetischen Wellen zu empfangen, und das empfangene Signal bedarfsweise nach verschiedenen Kriterien auszuwerten. Je nach bedarfsweiser konkreter Umsetzung können verschiedene Informationen über die Objekte gewonnen werden, welche für das Zurückwerfen des Echos ursächlich sind. Beispielsweise kann mit der Radartechnologie eine Ortung erfolgen. Weiterhin können Informationen über die Relativbewegung zwischen Sender und Objekt, über die absolute Geschwindigkeit eines der beiden oder, je nach Ausführung, über Konturen des Objekts gewonnen werden.

In der Automobiltechnologie gewinnt die Nutzung von Radar zunehmend an Bedeutung. Ein Hintergrund hierfür ist der Wunsch, die Autonomie von Fahrzeugen zu erhöhen, wodurch die Weiterentwicklung der in Fahrzeugen genutzten Sensoren getrieben wurde.

Inzwischen werden Radarsensoranordnungen zur Ausrüstung beispielsweise von Fahrzeugen als zum Einbau bereite Zukaufsysteme angeboten, die ein hohes Maß an Reichweite sowie lateraler Auflösung in der Objekterkennung bereitstellen.

Aus verschiedenen Gründen, nicht zuletzt regulatorischer Art, können diese beispielsweise im Frequenzbereich zwischen 24 GHz und 81 GHz betrieben werden, wobei im Bereich zwischen 77 GHz und 81 GHz betriebene Radarsensoren eine häufig genutzte Variante sind. Die genannten Frequenzbereiche werden aufgrund der Wellenlänge der ausgesandten elektromagnetischen Wellen im englischen gelegentlich auch als *mmWave* referenziert.

Die Nutzung von Radarsensoren hat den Vorteil, dass aufgrund des grundsätzlichen Funktionsprinzips, ein Echo elektromagnetischer Wellen zur Informationsgewinnung zu nutzen, Informationen erhalten werden können, die über die Ergebnisse hinausgehen, die mit Ultraschallsensoren gewonnen werden können; gegenüber der Nutzung von Lidarsystemen wiederum haben Radarsensoren den Vorteil, dass die Beschaffung von Radarsensoren mit geringeren Kosten einhergeht.

Mit der zunehmenden Anordnung einer hohen Zahl von Sensoren, beispielsweise an Kraftfahrzeugen, gewinnt die grundsätzliche Anforderung an Bedeutung, einen möglichst langen Betrieb der Sensoren zu gewährleisten.

Aufgabe der Erfindung ist daher, eine flexible und verbesserte Nutzbarkeit von Sensoren bereitzustellen, die auf Basis von Radarwellen arbeiten.

Die Aufgabe wird mit einer Radarsensoranordnung mit den Merkmalen des Anspruchs 1 und mit einem Kraftfahrzeug mit den Merkmalen des Anspruchs 20 gelöst.

Die erfindungsgemäße Radarsensoranordnung dient der Erkennung von Objekten.

Die erfindungsgemäße Radarsensoranordnung weist eine Antennenanordnung mit einer Empfangsschaltung mit einer Anzahl von Empfangsantennen und mit einer Sendeschaltung mit einer Anzahl von Sendeantennen auf. Beispielsweise kann vorgesehen sein, dass die Antennenanordnung drei Sendeantennen und vier Empfangsantennen aufweist, wie es bei einigen kommerziell angebotenen Radarsensoren der Fall ist.

Die erfindungsgemäße Radarsensoranordnung weist zudem eine zentrale Steuerschaltung mit einem Mikrocontroller auf. Die Steuerschaltung mit dem Mikrocontroller dient der Steuerung der Empfangsschaltung und der Sendeschaltung sowie, gegebenenfalls, der Auswertung der empfangenen Signale und/oder der Auswahl und Weitergabe der empfangenen Signale an weitere Recheneinheiten, beispielsweise einem mit dem Mikrocontroller gekoppelten zentralen Steuergerät eines Kraftfahrzeugs, zur Auswertung.

Erfindungsgemäß ist der Mikrocontroller eingerichtet, die Antennenanordnung mit einem von wenigstens zwei vorgegebenen unterschiedlichen Betriebsmodi zu betreiben. Ein erster Betriebsmodus ist ein Energiesparbetrieb und ein zweiter Betriebsmodus ein Erfassungsbetrieb.

Erfindungsgemäß ist also vorgesehen, dass über die entsprechend eingerichtete Programmierung des Mikrocontrollers herbeigeführt wird, dass neben dem Erfassungsbetrieb, der auch als regulärer Betrieb bezeichnet werden kann, ein Energiesparbetrieb vorgesehen ist, der mit einem geringeren elektrischen Energiebedarf einhergeht.

Erfindungsgemäß ist folglich vorgesehen, dass die Radarsensoranordnung über die Ansteuerung der Antennenanordnung mit dem Mikrocontroller von einem Energiesparbetrieb in einen regulären Erfassungsbetrieb umschaltbar ist und/oder dass die Radarsensoranordnung über die Ansteuerung mit dem Mikrocontroller von einem regulären Erfassungsbetrieb in einen Energiesparbetrieb umschaltbar ist.

Erfindungsgemäß ist vorgesehen, dass in dem Energiesparbetrieb die Sendeschaltung mit einer ersten Sendeansteuerungssequenz der Sendeantennen betrieben wird und in dem Erfassungsbetrieb die Sendeschaltung mit einer zweiten Sendeansteuerungssequenz der Sendeantennen betrieben wird. Die erste Sendeansteuerungssequenz löst dabei weniger Ansteuerungsvorgänge aus als die zweite Sendeansteuerungssequenz.

Beispielsweise kann vorgesehen sein, dass die erste Sendeansteuerungssequenz und die zweite Sendeansteuerungssequenz einen gleich langen Zeitraum abdecken, dabei aber während des gleichlangen Zeitraums die erste Sendeansteuerungssequenz vorsieht, dass eine oder mehrere der Sendeantennen häufiger nicht angesteuert werden als in der zweiten Sendeansteuerungssequenz Sendeantennen nicht angesteuert werden. Oder anders ausgedrückt: während des gleichlangen Zeitraums wird in der ersten Sendeansteuerungssequenz insgesamt eine geringere Anzahl von Ansteuerungen der Sendeantennen vorgenommen als in der zweiten Sendeansteuerungssequenz Ansteuerungsprozesse erfolgen. Im Sendebetrieb der Radarsensoranordnung kann vorgesehen sein, dass die Sendeansteuerungssequenz die Folge der Ansteuerung der Sendeantennen vorgibt und die Sequenz wiederholt durchlaufen wird.

So kann beispielsweise vorgesehen sein, dass in der zweiten Sendeansteuerungssequenz während eines Zeitraums von einer Sekunde N Ansteuerungszeitpunkte vorgesehen sind, wobei zu jedem Ansteuerungszeitpunkt bei n vorhandenen Sendeantennen n Ansteuerungsvorgänge ausgelöst werden. In einem solchen konkreten Beispiel würden also mit N Hertz n Ansteuerungsvorgänge vorgenommen. Zusätzlich kann vorgesehen sein, dass in der ersten Ansteuerungssequenz während eines Zeitraums von einer Sekunde N Ansteuerungszeitpunkte vorgesehen sind, wobei zu jedem Ansteuerungszeitpunkt bei n vorhandenen Sendeantennen nur ein Ansteuerungsvorgang ausgelöst wird, es wird also zu einem Ansteuerungszeitpunkt nur eine Sendeantenne angesteuert, wobei "N" und "n" jeweils positive ganze Zahlen > 0 bezeichnen. Es werden also in der ersten Sendeansteuerungssequenz eine oder mehrere der Sendeantennen häufiger nicht angesteuert werden als in der zweiten Sendeansteuerungssequenz Sendeantennen nicht angesteuert werden.

Insbesondere kann vorgesehen sein, dass die erste Sendeansteuerungssequenz und die zweite Sendeansteuerungssequenz eine selbe Anzahl von Ansteuerungsvorgängen pro Zeit aufweisen. Zusätzlich kann bevorzugt vorgesehen sein, dass die erste Sendeansteuerungssequenz und die zweite Sendeansteuerungssequenz gleich lang sind.

Beispielsweise kann vorgesehen sein, dass der Mikrocontroller eingerichtet ist, während der ersten Sendeansteuerungssequenz sequentiell, damit ist gemeint: zumindest in einem Ansteuerungszeitpunkt, bevorzugt in mehr als einem Ansteuerungszeitpunkt, besonders bevorzugt in jedem Ansteuerungszeitpunkt, wenigstens eine der Sendeantennen der Anzahl von Sendeantennen nicht anzusteuern. Das bedeutet mit anderen Worten, dass eine erste Sendeansteuerungssequenz vorsieht, dass in Abhängigkeit von der Zeit die Sendeantennen derart angesteuert werden, dass zumindest ein Ansteuerungszeitpunkt vorgesehen ist, in welchem wenigstens eine der Sendeantennen aus der Anzahl von Sendeantennen nicht angesteuert wird. Bevorzugt wird der Mikrocontroller derart eingerichtet, dass während der ersten Sendeansteuerungssequenz in jedem Ansteuerungsvorgang der Sendeansteuerungssequenz zumindest eine der Sendeantennen der Anzahl von Sendeantennen nicht angesteuert wird.

Dadurch, dass eine Sendeansteuerungssequenz vorgesehen ist, die vorsieht, dass an wenigstens einem Ansteuerungszeitpunkt, ggf. auch an mehreren Ansteuerungszeitpunkten der Sendeansteuerungssequenz und bevorzugt an jedem Ansteuerungszeitpunkt der Sendeansteuerungssequenz wenigstens eine der Sendeantennen nicht angesteuert wird, wird in dem Energiesparbetrieb ein geringerer Energiebedarf zur Signalaussendung benötigt als dies der Fall wäre, wenn an jedem Ansteuerungszeitpunkt jede Antenne angesteuert würde. Ein zusätzlicher Vorteil der erfindungsgemäßen Vorgehensweise liegt darin, dass die Umsetzung der Entwicklung in weiten Teilen durch das Konfigurieren der Ansteuerung möglich ist, was mit der prinzipiellen Möglichkeit einhergeht, bereits existierende Radarsensoren durch gezielte Konfiguration mit den beschriebenen Vorteilen zu versehen.

Bevorzugt ist vorgesehen, dass zu jedem Ansteuerungszeitpunkt zumindest eine Antenne angesteuert wird. Damit wird erreicht, dass der Energiebedarf zwar gegenüber einem Normalbetrieb reduziert ist, aber bei Auswertung von sich bewegenden Objekten keine zu großen Latenzen erhalten werden. Mit anderen Worten wird im Betrieb des Radarsensors die zeitliche Auflösung wenig beeinflusst.

Besonders bevorzugt ist vorgesehen, dass während der ersten Sendeansteuerungssequenz sequentiell, damit ist gemeint: zumindest in einem Ansteuerungszeitpunkt, bevorzugt in mehr als einem Ansteuerungszeitpunkt, besonders bevorzugt in jedem Ansteuerungszeitpunkt, genau eine der Sendeantennen angesteuert wird, was bedeutet, dass in jedem Ansteuerungszeitpunkt der ersten Sendeansteuerungssequenz genau eine Sendeantenne angesteuert wird; mit dieser Vorgehensweise wird eine weitgehende Minimierung des Energieverbrauchs für das Senden von Signalen erreicht. Insbesondere wird in der ersten Sendeansteuerungssequenz bevorzugt eine Sequenz von Ansteuerungsvorgängen ausgeführt, in der die Sendeantennen der Sendeschaltung nacheinander zum Senden angesteuert werden. Es wird also in einer Sendeansteuerungssequenz jede der Sendeantennen genau einmal angesteuert bevor, gegebenenfalls, eine der Sendeantennen ein zweites Mal angesteuert wird.

Besonders bevorzugt ist eine Weiterbildung, in welcher in einer ersten Sendeansteuerungssequenz jede der Sendeantennen genau einmal angesteuert wird und danach die erste Sendeansteuerungssequenz wiederholt wird. Diese Ausführung sieht also vor, dass eine erste Sendeansteuerungssequenz genauso viele Ansteuerungszeitpunkte und genauso viele Ansteuerungsvorgänge vorsieht, wie Sendeantennen in der Antennenanordnung vorhanden sind; wenn also beispielsweise die Antennenanordnung drei Sendeantennen aufweist, würde gemäß dieser Ausführungsform jede der drei Sendeantennen in einer Sendeansteuerungssequenz genau einmal angesteuert, und hiernach würde die erste Sendeansteuerungssequenz wiederholt werden, und zwar genauso lange und sooft, wie die Antennenanordnung im Energiesparbetrieb betrieben wird. Wenn die Antennenanordnung in den Erfassungsbetrieb wechselt, ist die zweite Sendeansteuerungssequenz bevorzugt gleich lang, sieht also genauso viele Ansteuerungszeitpunkte vor wie Sendeantennen vorhanden sind, wobei beispielsweise zu jedem Ansteuerungszeitpunkt jede Sendeantenne angesteuert wird, also beispielsweise bei drei Sendeantennen drei Ansteuerungszeitpunkte lang drei Sendeantennen angesteuert werden, wobei hiernach die zweite Sendeansteuerungssequenz wiederholt wird, was gleichbedeutend ist mit einer Betrachtung gemäß welcher mit einer vorgegebenen Ansteuerungsfrequenz alle Antennen angesteuert werden, solange die Antennenanordnung im Erfassungsbetrieb betrieben wird.

Im Gegenzug zu der ersten Sendeansteuerungssequenz kann die zweite Sendeansteuerungssequenz, mit welcher die Sendeantennenansteuerung im Erfassungsbetrieb vorgegeben ist, im einfachsten Fall so vorgegeben sein, dass jede der vorhandenen Sendeantennen entsprechend der Sendefrequenz kontinuierlich, das heißt: ohne einen Ansteuerungszeitpunkt auszusetzen, angesteuert wird. Im Gegensatz dazu ist im Energiesparbetrieb vorgesehen, dass für jede der vorhandenen Sendeantennen bestimmte Abfolgen vorgesehen sind, die vorstehend als erste Sendeansteuerungssequenz bezeichnet werden, und diese Abfolge vorsieht, dass beispielsweise während einer Abfolge zumindest in einem Schritt der Abfolge wenigstens eine der Sendeantennen nicht angesteuert wird und bevorzugt in jedem Ansteuerungsvorgang der Abfolge zumindest eine der Sendeantennen der Anzahl von Sendeantennen nicht angesteuert wird. Die Länge der Abfolge bemisst sich an der Ausgestaltung und kann vom die Erfindung durchführenden Fachmann frei gewählt werden, beispielsweise kann vorgesehen sein, dass die Sendeansteuerungssequenz N Ansteuerungszeitpunkte aufweist und dass nach Absolvieren der N Ansteuerungsvorgänge die Sendeansteuerungssequenz wiederholt wird, so dass die identischen Sendeansteuerungsvorgänge erneut durchgeführt werden.

Die vorstehend dargelegten Erläuterungen zu dem Betrieb der Sendeschaltung mit den Sendeantennen im Rahmen einer ersten und einer zweiten Sendeansteuerungssequenz können in gänzlich analoger Sicht auf den Betrieb der Empfangsschaltung mit den Empfangsantennen im Rahmen einer ersten und einer zweiten Empfangsansteuerungssequenz übertragen werden.

Beispielsweise kann vorgesehen sein, dass in dem Energiesparbetrieb die Empfangsschaltung mit einer ersten Empfangsansteuerungssequenz der Empfangsantennen betrieben wird und in dem Erfassungsbetrieb die Empfangsschaltung mit einer zweiten Empfangsansteuerungssequenz der Empfangsantennen betrieben wird. Die erste Empfangsansteuerungssequenz löst dabei weniger Ansteuerungsvorgänge aus als die zweite Empfangsansteuerungssequenz.

Beispielsweise kann vorgesehen sein, dass die erste Empfangsansteuerungssequenz und die zweite Empfangsansteuerungssequenz einen gleich langen Zeitraum abdecken, dabei aber während des gleichlangen Zeitraums die erste Empfangsansteuerungssequenz vorsieht, dass eine oder mehrere der Empfangsantennen häufiger nicht angesteuert werden als in der zweiten Empfangsansteuerungssequenz Empfangsantennen nicht angesteuert werden. Im Empfangsbetrieb der Radarsensoranordnung kann vorgesehen sein, dass die Empfangsansteuerungssequenz die Folge der Ansteuerung der Empfangsantennen vorgibt und die Sequenz wiederholt durchlaufen wird.

So kann beispielsweise vorgesehen sein, dass in der zweiten Empfangsansteuerungssequenz während eines Zeitraums von einer Sekunde N Ansteuerungszeitpunkte vorgesehen sind, wobei zu jedem Ansteuerungszeitpunkt bei n vorhandenen Empfangsantennen n Ansteuerungsvorgänge ausgelöst werden. In einem solchen konkreten Beispiel würden also mit N Hertz n Ansteuerungsvorgänge vorgenommen. Zusätzlich kann vorgesehen sein, dass in der ersten Ansteuerungssequenz während eines Zeitraums von einer Sekunde N Ansteuerungszeitpunkte vorgesehen sind, wobei zu jedem Ansteuerungszeitpunkt bei n vorhandenen Empfangsantennen nur ein Ansteuerungsvorgang ausgelöst wird, es wird also zu einem Ansteuerungszeitpunkt nur eine Empfangsantenne angesteuert, wobei "N" und "n" jeweils positive ganze Zahlen > 0 bezeichnen. Es werden also in der Empfangsansteuerungssequenz eine oder mehrere der Empfangsantennen häufiger nicht angesteuert werden als in der zweiten Empfangsansteuerungssequenz Empfangsantennen nicht angesteuert werden.

Insbesondere kann vorgesehen sein, dass die erste Empfangsansteuerungssequenz und die zweite Empfangsansteuerungssequenz eine selbe Anzahl von Ansteuerungsvorgängen pro Zeit aufweisen. Zusätzlich kann bevorzugt vorgesehen sein, dass die erste Empfangsansteuerungssequenz und die zweite Empfangsansteuerungssequenz gleich lang sind.

Beispielsweise kann vorgesehen sein, dass der Mikrocontroller eingerichtet ist, während der ersten Empfangsansteuerungssequenz sequentiell, damit ist gemeint: zumindest in einem Ansteuerungszeitpunkt, bevorzugt in mehr als einem Ansteuerungszeitpunkt, besonders bevorzugt in jedem Ansteuerungszeitpunkt, wenigstens eine der Empfangsantennen der Anzahl von Empfangsantennen nicht anzusteuern. Das bedeutet mit anderen Worten, dass eine erste Empfangsansteuerungssequenz vorsieht, dass in Abhängigkeit von der Zeit die Empfangsantennen derart angesteuert werden, dass zumindest ein Ansteuerungszeitpunkt vorgesehen ist, in welchem wenigstens eine der Empfangsantennen aus der Anzahl von Empfangsantennen nicht angesteuert wird. Bevorzugt wird der Mikrocontroller derart eingerichtet, dass während der ersten Empfangsansteuerungssequenz in jedem Ansteuerungsvorgang der Empfangsansteuerungssequenz zumindest eine der Empfangsantennen der Anzahl von Empfangsantennen nicht angesteuert wird.

Dadurch, dass eine Empfangsansteuerungssequenz vorgesehen ist, die vorsieht, dass an wenigstens einem Ansteuerungszeitpunkt, ggf. auch an mehreren Ansteuerungszeitpunkten der Empfangsansteuerungssequenz und bevorzugt an jedem Ansteuerungszeitpunkt der Empfangsansteuerungssequenz wenigstens eine der Empfangsantennen nicht angesteuert wird, wird in dem Energiesparbetrieb ein geringerer Energiebedarf zur Signalaussendung benötigt als dies der Fall wäre, wenn an jedem Ansteuerungszeitpunkt jede Antenne angesteuert würde.

Bevorzugt ist vorgesehen, dass zu jedem Ansteuerungszeitpunkt zumindest eine Antenne angesteuert wird. Damit wird erreicht, dass der Energiebedarf zwar gegenüber einem Normalbetrieb reduziert ist, aber bei Auswertung von sich bewegenden Objekten keine zu großen Latenzen erhalten werden. Mit anderen Worten wird im Betrieb des Radarsensors die zeitliche Auflösung wenig beeinflusst.

Besonders bevorzugt ist vorgesehen, dass während der ersten Empfangsansteuerungssequenz sequentiell, damit ist gemeint: zumindest in einem Ansteuerungszeitpunkt, bevorzugt in mehr als einem Ansteuerungszeitpunkt, besonders bevorzugt in jedem Ansteuerungszeitpunkt, genau eine der Empfangsantennen angesteuert wird, was bedeutet, dass in jedem Ansteuerungszeitpunkt der ersten Empfangsansteuerungssequenz genau eine Empfangsantenne angesteuert wird; mit dieser Vorgehensweise wird eine weitgehende Minimierung des Energieverbrauchs für das Empfangen von Signalen erreicht.

Insbesondere wird in der ersten Empfangsansteuerungssequenz bevorzugt eine Sequenz von Ansteuerungsvorgängen ausgeführt, in der die Empfangsantennen der Empfangsschaltung nacheinander zum Empfangen angesteuert werden. Es wird also in einer Empfangsansteuerungssequenz jede der Empfangsantennen genau einmal angesteuert bevor, gegebenenfalls, eine der Empfangsantennen ein zweites Mal angesteuert wird.

Besonders bevorzugt ist eine Weiterbildung, in welcher in einer ersten Empfangsansteuerungssequenz jede der Empfangsantennen genau einmal angesteuert wird und danach die erste Empfangsansteuerungssequenz wiederholt wird. Diese Ausführung sieht also vor, dass eine erste Empfangsansteuerungssequenz genauso viele Ansteuerungszeitpunkte und genauso viele Ansteuerungsvorgänge vorsieht, wie Empfangsantennen in der Antennenanordnung vorhanden sind, wenn also beispielsweise die Antennenanordnung drei Empfangsantennen aufweist, würde gemäß dieser Ausführungsform jede der drei Empfangsantennen in einer Empfangsansteuerungssequenz genau einmal angesteuert und hiernach würde die erste Empfangsansteuerungssequenz wiederholt werden, und zwar genauso lange und sooft, wie die Antennenanordnung im Energiesparbetrieb betrieben wird. Wenn die Antennenanordnung in den Erfassungsbetrieb wechselt, ist die zweite Empfangsansteuerungssequenz bevorzugt gleich lang, sieht also genauso viele Ansteuerungszeitpunkte vor wie Empfangsantennen vorhanden sind, wobei beispielsweise zu jedem Ansteuerungszeitpunkt jede Empfangsantenne angesteuert wird, also beispielsweise bei drei Empfangsantennen drei Ansteuerungszeitpunkte lang drei Empfangsantennen angesteuert werden, wobei hiernach die zweite Empfangsansteuerungssequenz wiederholt wird, was gleichbedeutend ist mit einer Betrachtung gemäß welcher mit einer vorgegebenen Ansteuerungsfrequenz alle Antennen angesteuert werden, solange die Antennenanordnung im Erfassungsbetrieb betrieben wird.

Im Gegenzug zu der ersten Empfangsansteuerungssequenz kann die zweite Empfangsansteuerungssequenz, mit welcher die Empfangsantennenansteuerung im Erfassungsbetrieb vorgegeben ist, im einfachsten Fall so vorgegeben sein, dass jede der vorhandenen Empfangsantennen entsprechend der Empfangsfrequenz kontinuierlich, das heißt: ohne einen Ansteuerungszeitpunkt auszusetzen, angesteuert wird. Im Gegensatz dazu ist im Energiesparbetrieb vorgesehen, dass für jede der vorhandenen Empfangsantennen bestimmte Abfolgen vorgesehen sind, die vorstehend als erste Empfangsansteuerungssequenz bezeichnet werden, und diese Abfolge vorsieht, dass beispielsweise während einer Abfolge zumindest in einem Schritt der Abfolge wenigstens eine der Empfangsantennen nicht angesteuert wird und bevorzugt in jedem Ansteuerungsvorgang der Abfolge zumindest eine der Empfangsantennen der Anzahl von Empfangsantennen nicht angesteuert wird. Die Länge der Abfolge bemisst sich an der Ausgestaltung und kann vom die Erfindung durchführenden Fachmann frei gewählt werden, beispielsweise kann vorgesehen sein, dass die Empfangsansteuerungssequenz N Ansteuerungszeitpunkte aufweist und dass nach Absolvieren der N Ansteuerungsvorgänge die Empfangsansteuerungssequenz wiederholt wird, so dass die identischen Empfangsansteuerungsvorgänge erneut durchgeführt werden.

Der Betrieb einer Sendeschaltung und einer Empfangsschaltung sind grundsätzlich parallel möglich. Insbesondere kann vorgesehen sein, dass eine erste Sendeansteuerungssequenz und eine erste Empfangsansteuerungssequenz eine selbe Anzahl an Ansteuerungsvorgängen aufweisen und/oder zweite erste Sendeansteuerungssequenz und eine zweite Empfangsansteuerungssequenz eine selbe Anzahl an Ansteuerungsvorgängen aufweisen, insbesondere die erste Sendeansteuerungssequenz und die zweite Sendeansteuerungssequenz und die erste Empfangsansteuerungssequenz und die zweite Empfangsansteuerungssequenz alle eine selbe Anzahl an Ansteuerungszeitpunkten aufweisen.

Erfindungsgemäß ist vorgesehen, dass in einem Ansteuerungsvorgang in dem ersten Betriebsmodus eine höhere Sendeleistung pro angesteuerter Antenne vorgesehen ist als in einem Ansteuerungsvorgang in dem zweiten Betriebsmodus. Gemäß einer bevorzugten Weiterbildung kann vorgesehen sein, dass ein Ansteuerungsvorgang in dem ersten Betriebsmodus eine höhere Sendeleistung pro angesteuerter Antenne aufweist als jeder Ansteuerungsvorgang in dem zweiten Betriebsmodus, bevorzugt jeder erfolgte Ansteuerungsvorgang in dem ersten Betriebsmodus eine höhere Sendeleistung pro angesteuerter Antenne aufweist als in dem zweiten Betriebsmodus.

Das bedeutet insbesondere, dass für einen oder mehrere, bevorzugt alle, Sendeansteuerungsvorgänge im ersten Betriebsmodus gilt, dass die für das Senden eines Signals angesteuerte Sendeantenne beziehungsweise Sendeantennen jeweils mit einer höheren Sendeleistung pro angesteuerter Antenne angesteuert werden als dass dies für den im zweiten Betriebsmodus der Fall ist. Das bedeutet, dass zu einem gegebenen Ansteuerungszeitpunkt im ersten Betriebsmodus ein Ansteuern einer Sendeantenne gemäß obiger Beschreibung dann, wenn es denn erfolgt, es mit gegenüber dem zweiten Betriebsmodus erhöhter Sendeleistung erfolgt. Dies kann für zumindest einen Ansteuerungszeitpunkt gelten, aber auch für mehrere oder alle.

Beispielsweise kann vorgesehen sein, dass in dem ersten Betriebsmodus die Sendeansteuerungssequenz zumindest eine Hochleistungsansteuerung, bevorzugt genau eine Hochleistungsansteuerung aufweist, in der eine, bevorzugt genau eine, Sendeantenne mit höherer Sendeleistung pro angesteuerter Antenne betrieben wird als jeder Ansteuerungsvorgang in dem zweiten Betriebsmodus dies vorsieht.

Das bedeutet beispielsweise in einer Ausführung, dass im ersten Betriebsmodus in der Sendeansteuerungssequenz einer oder genau einer der Ansteuerungsvorgänge einer, bevorzugt genau einer, Sendeantenne mit einer erhöhten Sendeleistung pro angesteuerter Antenne durchgeführt wird, während die weiteren Ansteuerungsvorgänge in der Sendeansteuerungssequenz im ersten Betriebsmodus jeweils mit einer ersten vorgegebenen Sendeleistung pro angesteuerter Antenne erfolgen. Im zweiten Betriebsmodus erfolgen die Ansteuerungsvorgänge der Sendeansteuerungssequenz jeweils mit einer zweiten vorgegebenen Sendeleistung pro angesteuerter Antenne. Dabei ist denkbar, dass die erste vorgegebene Sendeleistung pro angesteuerter Antenne und die zweite vorgegebene Sendeleistung pro angesteuerter Antenne gleich sind oder nur geringfügig, beispielsweise um +/- 10 % des höheren der beiden Werte, voneinander abweichen. Entscheidend ist dabei, dass der oben erwähnte Ansteuerungsvorgang oder die oben erwähnten Ansteuerungsvorgänge einer Sendeantenne mit einer erhöhten Sendeleistung durchgeführt werden, die gegenüber der ersten Sendeleistung pro angesteuerter Antenne und der zweiten Sendeleistung pro angesteuerter Antenne erhöht ist, beispielsweise wenigstens doppelt so hoch ist. Beispielsweise kann vorgesehen sein, dass genau einer der Ansteuerungsvorgänge mit genau einer Sendeantenne mit einer erhöhten Sendeleistung durchgeführt wird, wobei die erhöhte Sendeleistung die maximale Sendeleistung oder wenigstens 80 % der maximalen Sendeleistung der Radarsensoranordnung ist. Die erste Gesamtsendeleistung, also die Gesamtsendeleistung der Summe der ersten vorgegebenen Sendeleistungen pro angesteuerter Antenne in einem Ansteuerungsvorgang, und die zweite Gesamtsendeleistung, also die Gesamtsendeleistung der Summe der ersten vorgegebenen Sendeleistungen pro angesteuerter Antenne in einem Ansteuerungsvorgang, sind für jeden Ansteuerungsvorgang geringer, beispielsweise zwischen 10 % und 75 % der maximalen Sendeleistung der Radarsensoranordnung. Wenn, wie bevorzugt, die erste vorgegebene Sendeleistung pro angesteuerter Antenne und die zweite vorgegebene Sendeleistung pro angesteuerter Antenne gleich sind oder nur geringfügig, beispielsweise um +/- 10 % des höheren der beiden Werte, voneinander abweichen, ergibt sich aufgrund des Umstands, dass die erste Sendeansteuerungssequenz weniger Ansteuerungsvorgänge auslöst als die zweite Sendeansteuerungssequenz, dass in der ersten Sendeansteuerungssequenz gegenüber der zweiten Sendeansteuerungssequenz weniger Energieumwandlung erforderlich ist, also ein geringerer Energiebedarf besteht.

Das Senden eines Signals in dem ersten Betriebsmodus, der ein Energiesparmodus ist, mit einer höheren Sendeleistung als der Sendeleistung, mit der im zweiten Betriebsmodus gesendet wird, widerspricht scheinbar der Ausführung des ersten Betriebsmodus als Energiesparmodus, ist also kontraintuitiv. Das Senden des Signals in dem ersten Betriebsmodus und die Sendeleistung im zweiten Betriebsmodus ist erfindungsgemäß derart bemessen, dass aufgrund der Anzahl der Ansteuerungsvorgänge im ersten Betriebsmodus, die geringer ist als es für die Anzahl der Ansteuerungsvorgänge im zweiten Betriebsmodus der Fall ist, insgesamt trotz der durchgeführten Hochleistungsansteuerung im ersten Betriebsmodus in diesem ersten Betriebsmodus im Vergleich zu dem zweiten Betriebsmodzus die Energiespareigenschaft erreicht wird.

Die Durchführung der Hochleistungsansteuerung in dem ersten Betriebsmodus hat den Vorteil, dass eine Radarinformation für eine höhere Distanz erhalten werden kann. Diese Information kann sodann ausgenutzt werden, beispielsweise in der Auswertung, ob von dem Energiesparbetrieb in den Erfassungsbetrieb umgeschaltet werden soll.

Bevorzugt ist vorgesehen, dass für einen Ansteuerungsvorgang in dem ersten Betriebsmodus eine kleinere Bandbreite der Sendefrequenzen genutzt wird als für einen Ansteuerungsvorgang in dem zweiten Betriebsmodus. Dies kann beispielsweise umgesetzt werden, indem jeder erfolgte Ansteuerungsvorgang in dem ersten Betriebsmodus eine kleinere Bandbreite der Sendefrequenzen aufweist als jeder Ansteuerungsvorgang in dem zweiten Betriebsmodus, das also jede Bandbreite der Ansteuerungsvorgänge im ersten Betriebsmodus kleiner ist als jede Bandbreite der Ansteuerungsvorgänge im zweiten Betriebsmodus. Zwar wird mit einer umso kleineren Bandbreite eine desto geringere Distanzauflösung erreicht; eine hohe Distanzauflösung ist andererseits aber auch von geringerer Relevanz, soweit Informationen für die Auswertung zur Erkennung von einer Annäherung in vergleichsweise hoher Distanz benötigt werden, und bei einer erkannten Annäherung eine Umschaltung in den Erfassungsmodus vorgesehen wird. Das Vorsehen einer kleinen Bandbreite führt zu vorteilhaften Eigenschaften der erfassten Signale, insbesondere in dem geringeren Auswerteaufwand durch den Mikrocontroller der Radarsensoranordnung, sodass der gewünschte Energiespareffekt begünstigt wird. In besonderer Weise entfaltet somit die Kombination von vergleichsweise höherer Sendeleistung und vergleichsweise geringerer Frequenzbandbreite ihre Vorteile.

Besonders bevorzugt ist vorgesehen, dass die Abtastrate zur Abtastung des Empfangssignals im ersten Betriebsmodus kleiner ist als im zweiten Betriebsmodus. Dadurch wird auf Ebene des Mikrocontrollers ein geringerer Auswerteaufwand nötig, wodurch wiederum ein geringerer Energieeinsatz begünstigt wird.

In einer bevorzugten Weiterbildung der Radarsensoranordnung kann beispielsweise vorgesehen sein, dass auf einem Speichermittel der zentralen Steuerschaltung eine Anzahl von Abtastratenvarianten hinterlegt ist, wobei die Abtastrate ein Parameter in Abhängigkeit von einer Radarantwort, genauer: von einem Parameter der Radarantwort oder mehreren Parametern der Radarantwort, ist, sodass die Abtastrate nach Auswertung der Radarantwort gewählt wird. Durch dieses Vorgehen kann erreicht werden, dass die Abtastrate in Abhängigkeit von vordefinierten Parametern eingestellt wird. Die vordefinierten Parameter können empirisch gefunden und auf dem Speichermittel hinterlegt werden, beispielsweise durch empirisches Durchspielen von Referenzszenen, die erwarteten Einsatzszenarien nachgestellt sind.

In einer weiteren Ausführung kann vorgesehen sein, dass im ersten Betriebsmodus für jede Sendeantenne der Anzahl von Sendeantennen unterschiedliche Chirps für das Ansteuern der Sendeantennen konfiguriert sind, und/oder im zweiten Betriebsmodus für jede Sendeantenne der Anzahl von Sendeantennen unterschiedliche Chirps für das Ansteuern der Sendeantennen konfiguriert sind. Durch das Vorsehen unterschiedlicher Chirps für die einzelnen Antennen kann die Auswertung der empfangenen Signale verbessert werden.

Alternativ oder zusätzlich kann vorgesehen sein, dass im ersten Betriebsmodus eine erste Chirp-Konfiguration für das Ansteuern der Sendeantennen konfiguriert ist, und im zweiten Betriebsmodus eine zweite Chirp-Konfiguration für das Ansteuern der Sendeantennen konfiguriert ist. Bevorzugt erfolgt dabei im ersten Betriebsmodus oder im zweiten Betriebsmodus oder in beiden Betriebsmodi das Ansteuern aller Empfangsantennen auf gleiche Weise.

Besonders bevorzugt ist vorgesehen, dass die erste Chirp-Konfiguration festlegt, dass für eine Sendeantenne oder für mehrere Sendeantennen oder für alle Sendeantennen gilt, dass ein Ansteuerungsvorgang mit einer höheren Sendeleistung pro angesteuerter Antenne und einer kleineren Bandbreite der Sendefrequenzen und ein Ansteuerungsvorgang mit einer kleineren Sendeleistung pro angesteuerter Antenne und einer größeren Bandbreite der Sendefrequenzen alternieren.

Alternativ kann vorgesehen sein, dass die erste Chirp-Konfiguration festlegt, dass für eine Sendeantenne oder für mehrere Sendeantennen oder für alle Sendeantennen gilt, dass ein erster Ansteuerungsvorgang mit einer ersten Sendeleistung pro angesteuerter Antenne und einer ersten Bandbreite der Sendefrequenzen und ein zweiter Ansteuerungsvorgang mit einer zweiten Sendeleistung pro angesteuerter Antenne und einer zweiten Bandbreite der Sendefrequenzen alternieren, wobei die zweite Sendeleistung Null ist oder nahezu Null Watt, beispielsweise pro angesteuerter Antenne nicht mehr als 5 Prozent der maximalen Sendeleistung der Radarsensoranordnung, ist, und die zweite Bandbreite Null ist oder nahezu Null Hz, beispielsweise nicht mehr als 5 Prozent der maximalen Bandbreite, alternativ oder zusätzlich bevorzugt weniger als 100 Hz, ist. Dieses Vorgehen wird nachfolgend als "Ghost Chirps" bezeichnet. Insbesondere kann vorgesehen sein, dass der Begriff des "Alternierens" umfasst, dass nur jeder n-te Ansteuerungsvorgang ein erster Ansteuerungsvorgang ist, und dass zwisch zwei solcher Ansteuerungsvorgänge eine Anzahl von n-1 zweiten Ansteuerungsvorgängen durchgeführt wird, mit n einer positiven ganzen Zahl größer oder gleich 2, bevorzugt eine Zahl von 3 bis 10, beispielsweise 5. Durch dieses Vorgehen wird durch unaufwendige Weise bewirkt, dass nur vergleichsweise selten, nämlich nur jedes n-te Mal, ein relevanter Energiebedarf für das Aussenden von Radarsignalen besteht. Dieser Ansatz basiert auf der Annahme, dass im Unterschied zu dem Erfassungsmodus in dem Energiesparmodus der Bedarf nach zeitlich höher aufgelösten Daten nicht besteht. Bevorzugt werden sowohl in dem ersten Betriebsmodus als auch in dem zweiten Betriebsmodus dieselben Auswerteroutinen, insbesondere dieselbe mathematische Filterung, angewandt. Dadurch, dass auch die zweiten Ansteuerungsvorgänge - wenn auch mit minimaler Bandbreite und Sendeleistung von Null oder nahe Null Hertz beziehungsweise Watt - real durchgeführt werden, kann die Auswertung in beiden Modi in gleicher Weise, insbesondere unter Nutzung derselben Filterketten, erfolgen. Um zu vermeiden, dass die Auswertung durch den Radarempfang nach Aussenden der Ghost Chirps fehleranfällig ist, kann bevorzugt vorgesehen sein, dass die Radarseinsoranordnung ausgebildet ist, nachfolgend an das Aussenden eines Ghost Chirps für einen bestimmten, beispielsweise empirisch festgelegten, Zeitraum die Empfangssignalketten künstlich mit Daten anzureichern, bevorzugt unter Verwendung von Reed-Solomon-Code. Dadurch wird erreicht, dass die Auswertung weniger fehleranfällig und insgesamt genauer wird.

Um zum geeigneten Zeitpunkt in den Erfassungsbetrieb zu wechseln, ist der Mikrocontroller eingerichtet, bei Betrieb der Antennenanordnung im Energiesparbetrieb mit der Empfangsschaltung erfasste Signale als Radarantworten abzufragen und eine Auswertung durchzuführen, wobei der Mikrocontroller von dem Energiesparbetrieb in den Erfassungsbetrieb wechselt, wenn die Auswertung das Vorliegen eines vorgegebenen Kriteriums ergibt. Das vorgegebene Kriterium kann beispielsweise umfassen oder darin bestehen, dass die Auswertung auf eine Annäherung eines Hindernisses, eines Benutzers oder auf einen Türöffnungswunsch eines Benutzers schließen lässt, was beispielsweise durch das Übereinstimmen einer erfassten Radarantwort mit einer auf dem Mikrocontroller oder auf einem mit dem Mikrocontroller gekoppelten Speicher hinterlegten empirisch ermittelten charakteristischen Radarantwort festgestellt werden kann. Als alternatives oder zusätzliches Kriterium kann das Vorliegen einer Türschlossbetätigung vorausgesetzt werden.

Ein Wechsel von dem Erfassungsbetrieb in den Energiesparbetrieb kann beispielsweise wiederum erfolgen, wenn für einen vorgegebenen Zeitraum, beispielsweise von einer Sekunde oder fünf Sekunden oder zehn Sekunden oder einer Minute, die Radarantwort, also die mit der Empfangsschaltung erfassten Signale, die Abwesenheit eines nahen Körpers vermuten lässt, beispielsweise indem ein unterer Schwellwert eines Empfangssignals für eine gewisse Zeit nicht überschritten wird. Als alternatives oder zusätzliches Kriterium Wechsel von dem Erfassungsbetrieb in den Energiesparbetrieb kann beispielsweise das Erkennen des Initiierens des Abschließens der Fahrzeugtür genutzt werden, wobei eine entsprechend beteiligte Steuereinrichtung des Fahrzeugs den Mikrocontroller der Radarsensoranordnung mit einem entsprechenden Ausgabesignal hierüber informiert.

Bevorzugt ist es, dass die Antennenanordnung und die Steuerschaltung mit dem Mikrocontroller auf einer selben Leiterplatte angeordnet sind, denn dadurch wird es ermöglicht, die Radaranordnung als ein kompaktes Einbauteil auszuliefern, beispielsweise an einen Hersteller eines Kraftfahrzeugs.

Besonders bevorzugt ist es, dass die Antennenanordnung und die Steuerschaltung mit Mikrocontroller auf einem selben Chip angeordnet sind und ein sogenanntes *System-on-a-Chip* bilden; in einer solchen Ausgestaltung wird der zuvor genannte Vorteil der Möglichkeit zur Anbietung als Einbauteil mit dem Vorteil einer Miniaturisierung verknüpft, wodurch eine erhöhte Flexibilität in der Möglichkeit zum Einbau geboten wird.

Bevorzugt ist die Radarsensoranordnung für einen Radarbetrieb mit Radarwellen im Millimeterbereich ausgelegt, besonders bevorzugt mit Wellenlängen der ausgesendeten Radarwellen zwischen 1 mm und 20 mm.

Bevorzugt ist die Radarsensoranordnung für einen Radarbetrieb mit Radarwellen im Frequenzbereich zwischen 20 GHz und 100 GHz ausgelegt, besonders bevorzugt zwischen 77 GHz und 81 GHz. Ein Gedanke der Erfindung ist es, ein Kraftfahrzeug bereitzustellen, in welches eine Radarsensoranordnung der oben genannten Ausbildungen für die Erkennung von Objekten angeordnet ist. Die Radarsensoranordnung kann insbesondere in einem Türgriff oder einer Säule, beispielsweise einer B-Säule, oder in einem Designelement angeordnet sein.

Besonders bevorzugt ist die Radarsensoranordnung mit einem Steuergerät des Kraftfahrzeugs gekoppelt und das Kraftfahrzeug weist ein mit dem Steuergerät gekoppeltes *Keyless-Entry-*Fahrzeugzugangssystem auf zur Authentifikation eines Bedieners, der einen drahtlosen ID-Geber mit sich führt. Der Mikrocontroller der Radarsensoranordnung ist bevorzugt eingerichtet, aus dem Energiesparbetrieb heraus nur unter der zusätzlich vorliegenden Voraussetzung in den Erfassungsbetrieb eintreten zu können, dass der Mikrocontroller ein Bestätigungssignal seitens des Steuergeräts erhalten hat zur Bestätigung, dass eine erfolgreiche Authentifizierung des in Funkreichweite befindlichen ID-Gebers stattgefunden hat. Beispielsweise kann vorgesehen sein, dass das *Keyless-Entry-*Fahrzeug-Zugangssystem als pollende Wecksignale aussendendes System ausgebildet ist, wobei der ID-Geber eingerichtet ist, bei Empfang des Wecksignals einen Authentifizierungsdialog zu starten. Beispielsweise kann zu einem Zeitpunkt, in dem die Authentifizierung erfolgreich stattgefunden hat, oder unmittelbar nach diesem Zeitpunkt oder in einem vorgegebenem Zeitabstand nach diesem Zeitpunkt, ein Bestätigungssignal vom Steuergerät an den Mikrocontroller der Radarsensoranordnung ausgegeben werden, beispielsweise als Flag innerhalb des Mikrocontrollers abgespeichert werden, und nur bei Vorhandensein dieses Flags in einem Fall, in welchem das vorgegebene Kriterium zum Übergang des Betriebs der Antennenanordnung aus dem Energiesparbetrieb in den Erfassungsbetrieb erfüllt wurde, das Flag auf Vorhandensein abgefragt werden und im Falle des Vorhandenseins der Übergang des Betriebs der Antennenanordnung in den Erfassungsbetrieb erfolgen.

Weitere Einzelheiten, Merkmale und Vorteile der erfindungsgemäßen Radarsensoranordnung des erfindungsgemäßen Kraftfahrzeugs ergeben sich aus der nachfolgenden Beschreibung in Zusammenhang mit den Zeichnungen, in denen beispielshaft Ausführungsbeispiele der Erfindung dargestellt sind.

Es versteht sich, dass die vorstehend genannten wie auch nachfolgend erläuterten Merkmale nicht nur in der jeweils angegebenen Kombination, sondern auch in anderen Kombinationen verwendbar sind. Es zeigen:
Fig. 1: Eine schematische Darstellung einer Ausführungsform einer erfindungsgemäßen Radarsensoranordnung;
Fig. 2: eine schematische Darstellung des Betriebs der Ansteuerung der Sendeschaltung der Radarsensoranordnung der Fig. 1 im Energiesparbetrieb;
Fig. 3: eine schematische Darstellung des Betriebs der Ansteuerung der Sendeschaltung der Radarsensoranordnung der Fig. 1 im Erfassungsbetrieb;
Fig. 4: eine schematische Darstellung eines Kraftfahrzeugs, enthaltend eine Radarsensoranordnung der in Fig. 1 gezeigten Art.

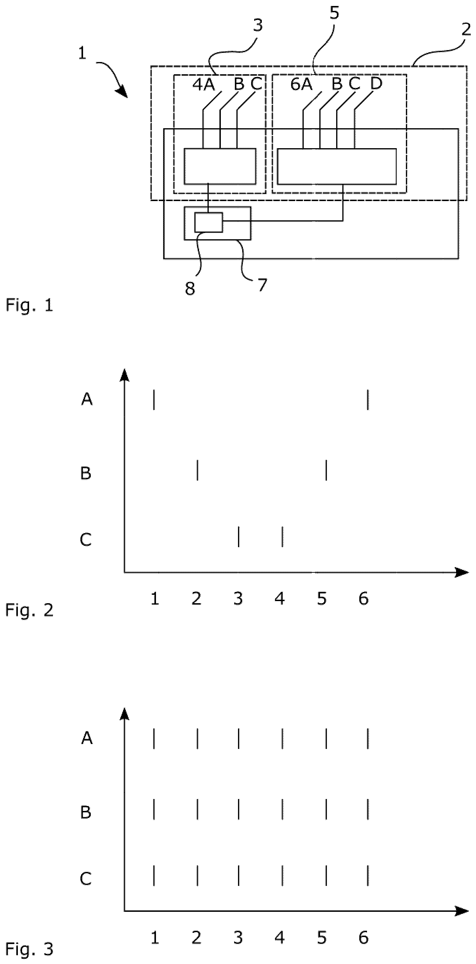

Fig. 1 zeigt eine schematische Darstellung einer Radarsensoranordnung 1. Die Radarsensoranordnung weist eine Antennenanordnung 2 auf. Die Antennenanordnung umfasst eine Sendeschaltung 3 mit einer Anzahl von drei Sendeantennen 4A, 4B, 4C. Außerdem umfasst die Antennenanordnung eine Empfangsschaltung 5 mit vier Empfangsantennen 6A, 6B, 6C und 6D. Mit der Antennenanordnung ist eine zentrale Steuerschaltung 7 mit einem Mikrocontroller 8 gekoppelt.

Der Mikrocontroller 8 dient der Steuerung der Antennenschaltung und ist eingerichtet, die Antennenanordnung mit einem von zwei vorgegebenen unterschiedlichen Betriebsmodi zu betreiben, wobei ein erster Betriebsmodus ein Energiesparbetrieb ist und ein zweiter Betriebsmodus ein Erfassungsbetrieb ist.

Der Energiesparbetrieb ist in Fig. 2 schematisch dargestellt. Es ist anhand der Sendeansteuerungssequenz die Ansteuerung der Sendeantennen im Energiesparbetrieb dargestellt. Die Sendeansteuerungssequenz weist sechs Ansteuerungszeitpunkte 1 bis 6 auf, die auf der t-Achse dargestellt sind, wobei für jeden Ansteuerungszeitpunkt die gerade angesteuerte Sendeantenne mit einer Markierung im Graphen, entweder in der Zeile A, der Zeile B oder der Zeile C, je nach Antenne, repräsentiert wird. In jedem Ansteuerungszeitpunkt wird sequentiell genau eine der Sendeantennen angesteuert, und zwar jede der Sendeantennen mit einer gleichen Anzahl von im gezeigten Fall zwei Ansteuerungsvorgängen.

In dem in Fig. 3 dargestellten Erfassungsbetrieb wird die Sendeschaltung mit einer zweiten Sendeansteuerungssequenz der Sendeantennen betrieben, wobei diese Sendeansteuerungssequenz in sechs Ansteuerungsvorgängen vorsieht, dass in jedem dieser Ansteuerungsvorgänge alle drei Antennen angesteuert werden. Dies bedeutet im Ergebnis, dass in der ersten Sendeansteuerungssequenz, gezeigt in Fig. 2, sechs Ansteuerungsvorgänge ausgelöst werden und in der zweiten Sendeansteuerungssequenz, illustriert in Fig. 3, achtzehn Ansteuerungsvorgänge auslöst werden. Das bedeutet, dass in der ersten Sendeansteuerungssequenz weniger Ansteuerungsvorgänge ausgelöst werden als in der zweiten Sendeansteuerungssequenz, wodurch der gewünschte Energiespareffekt herbeigeführt wird. Die Darstellung der Empfangsansteuerungssequenzen in Energiesparbetrieb und in Erfassungsbetrieb sind analog zu den in Fig. 2 und Fig. 3 zu sehenden Illustrationen aufzufassen, allerdings wären bei Benutzung einer Radarsensoranordnung gemäß Fig. 1 vier Empfangsantennen zu berücksichtigen.

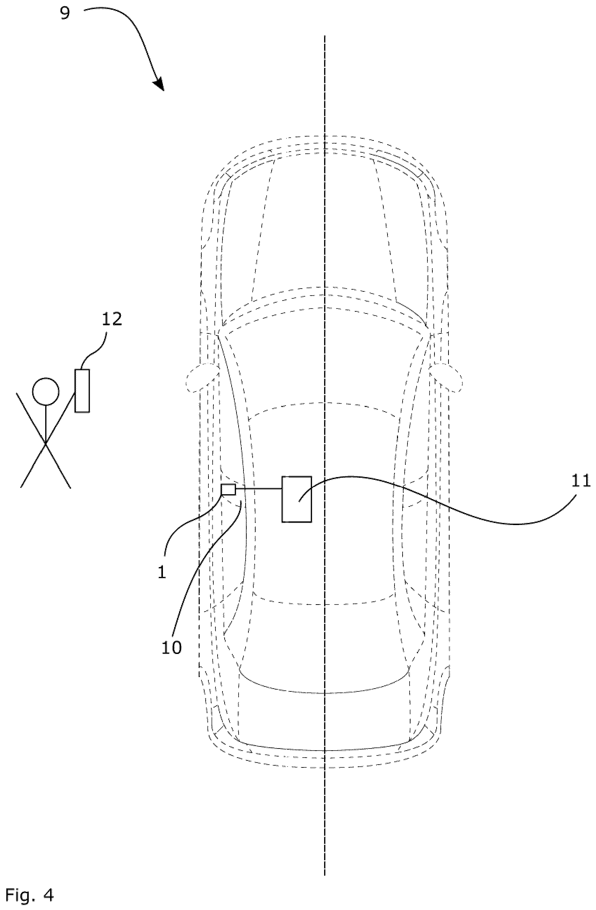

Fig. 4 ist ein Kraftfahrzeug 9 zu entnehmen, das eine Radarsensoranordnung 1 enthält, mit der Objekte erkannt werden können. Die Radarsensoranordnung 1 ist beispielhaft in der B-Säule 10 angeordnet.

Die Radarsensoranordnung 1 ist mit einem Steuergerät 11 des Kraftfahrzeugs gekoppelt. Ein Bediener, der einen drahtlosen ID-Geber 12 mit sich führt, wird von einem Keyless-Entry-System des Kraftfahrzeugs authentifiziert und das Steuergerät informiert den Mikrocontroller der Radarsensoranordnung 1 hierüber. Der Mikrocontroller ist eingerichtet, in den Erfassungsbetrieb nur unter der Voraussetzung eintreten zu können, dass der Mikrocontroller während eines vorgegebenen Zeitraums ein Bestätigungssignal seitens des Steuergeräts 11 erhalten hat zur Bestätigung, dass eine erfolgreiche Authentifizierung des in Funkreichweite befindlichen ID-Gebers 12 stattgefunden hat.

## Patentansprüche

1. Radarsensoranordnung (1) zur Erkennung von Objekten, wobei die Radarsensoranordnung (1) wenigstens aufweist:
- eine Antennenanordnung (2) mit
einer Empfangsschaltung (5) mit einer Anzahl von Empfangsantennen (6A, 6B, 6C, 6D) und mit
einer Sendeschaltung (3) mit einer Anzahl von Sendeantennen (4A, 4B, 4C),
- eine mit der Empfangsschaltung (5) und mit der Sendeschaltung (3) gekoppelte zentrale Steuerschaltung (7) mit einem Mikrocontroller (8),
wobei der Mikrocontroller (8) eingerichtet ist, die Antennenanordnung mit einem von wenigstens zwei vorgegebenen unterschiedlichen Betriebsmodi zu betreiben,
wobei ein erster Betriebsmodus ein Energiesparbetrieb ist und ein zweiter Betriebsmodus ein Erfassungsbetrieb ist,
wobei der Mikrocontroller (8) eingerichtet ist,
in dem Energiesparbetrieb die Sendeschaltung (3) mit einer ersten Sendeansteuerungssequenz der Sendeantennen (4A, 4B, 4C) zu betreiben, und
in dem Erfassungsbetrieb die Sendeschaltung (3) mit einer zweiten Sendeansteuerungssequenz der Sendeantennen (4A, 4B, 4C) zu betreiben,
wobei die erste Sendeansteuerungssequenz weniger Ansteuerungsvorgänge auslöst als die zweite Sendeansteuerungssequenz,
**dadurch gekennzeichnet, dass**
ein Ansteuerungsvorgang in dem ersten Betriebsmodus eine höhere Sendeleistung pro angesteuerter Antenne aufweist als ein Ansteuerungsvorgang in dem zweiten Betriebsmodus,
wobei ein Senden des Signals in dem ersten Betriebsmodus und die Sendeleistung im zweiten Betriebsmodus derart bemessen ist, dass aufgrund der Anzahl der Ansteuerungsvorgänge im ersten Betriebsmodus, die geringer ist als es für die Anzahl der Ansteuerungsvorgänge im zweiten Betriebsmodus der Fall ist, insgesamt trotz der durchgeführten Hochleistungsansteuerung im ersten Betriebsmodus in diesem ersten Betriebsmodus im Vergleich zu dem zweiten Betriebsmodus die Energiespareigenschaft erreicht wird.

2. Radarsensoranordnung (1) nach Anspruch 1, wobei der Mikrocontroller (8) eingerichtet ist, im Energiesparbetrieb während der ersten Sendeansteuerungssequenz sequentiell, bevorzugt zu jedem Ansteuerungszeitpunkt der Sendeansteuerungssequenz, wenigstens eine der Sendeantennen (4A, 4B, 4C) der Anzahl von Sendeantennen (4A, 4B, 4C) nicht anzusteuern.

3. Radarsensoranordnung (1) nach Anspruch 1 oder nach Anspruch 2, wobei der Mikrocontroller (8) eingerichtet ist, im Energiesparbetrieb während der ersten Sendeansteuerungssequenz sequentiell genau eine der Sendeantennen (4A, 4B, 4C) anzusteuern, bevorzugt jede der Sendeantennen in einer Sendeansteuerungssequenz mit einer gleichen Anzahl von Ansteuerungsvorgängen.

4. Radarsensoranordnung (1) nach einem der vorhergehenden Ansprüche, wobei der Mikrocontroller (8) eingerichtet ist,
in dem Energiesparbetrieb die Empfangsschaltung (5) mit einer ersten Empfangsansteuerungssequenz der Empfangsantennen (6A, 6B, 6C, 6D) zu betreiben, und
in dem Erfassungsbetrieb die Empfangsschaltung (5) mit einer zweiten Empfangsansteuerungssequenz der Empfangsantennen (6A, 6B, 6C, 6D) zu betreiben,
wobei die erste Empfangsansteuerungssequenz weniger Ansteuerungsvorgänge auslöst als die zweite Empfangsansteuerungssequenz.

5. Radarsensoranordnung (1) nach Anspruch 4, wobei der Mikrocontroller (8) eingerichtet ist, im Energiesparbetrieb während der ersten Empfangsansteuerungssequenz sequentiell, bevorzugt zu jedem Ansteuerungszeitpunkt der Empfangsansteuerungssequenz, wenigstens eine der Empfangsantennen (6A, 6B, 6C, 6D) der Anzahl von Empfangsantennen (6A, 6B, 6C, 6D) nicht anzusteuern.

6. Radarsensoranordnung (1) nach Anspruch 4 oder nach Anspruch 5, wobei der Mikrocontroller (8) eingerichtet ist, im Energiesparbetrieb während der ersten Empfangsansteuerungssequenz sequentiell genau eine der Empfangsantennen (6A, 6B, 6C, 6D) anzusteuern, bevorzugt jede der Empfangsantennen (6A, 6B, 6C, 6D) in einer Empfangsansteuerungssequenz mit einer gleichen Anzahl von Ansteuerungsvorgängen.

7. Radarsensoranordnung (1) nach einem der vorhergehenden Ansprüche, wobei
ein Ansteuerungsvorgang in dem ersten Betriebsmodus eine höhere Sendeleistung pro angesteuerter Antenne aufweist als jeder Ansteuerungsvorgang in dem zweiten Betriebsmodus,
bevorzugt jeder erfolgte Ansteuerungsvorgang in dem ersten Betriebsmodus eine höhere Sendeleistung pro angesteuerter Antenne aufweist als in dem zweiten Betriebsmodus.

8. Radarsensoranordnung nach einem der vorhergehenden Ansprüche, wobei in dem ersten Betriebsmodus die Sendeansteuerungssequenz zumindest eine Hochleistungsansteuerung, bevorzugt genau eine Hochleistungsansteuerung aufweist, in der eine, bevorzugt genau eine, Sendeantenne mit höherer Sendeleistung pro angesteuerter Antenne betrieben wird als jeder Ansteuerungsvorgang in dem zweiten Betriebsmodus dies vorsieht.

9. Radarsensoranordnung (1) nach einem der vorhergehenden Ansprüche, wobei
ein Ansteuerungsvorgang in dem ersten Betriebsmodus eine kleinere Bandbreite der Sendefrequenzen aufweist als in dem zweiten Betriebsmodus,
bevorzugt jeder erfolgte Ansteuerungsvorgang in dem ersten Betriebsmodus eine kleinere Bandbreite der Sendefrequenzen aufweist als in dem zweiten Betriebsmodus.

10. Radarsensoranordnung (1) nach einem der vorhergehenden Ansprüche, wobei die Abtastrate zur Abtastung des Empfangssignals im ersten Betriebsmodus kleiner ist als im zweiten Betriebsmodus.

11. Radarsensoranordnung (1) nach einem der vorhergehenden Ansprüche, wobei auf einem Speichermittel der zentralen Steuerschaltung eine Anzahl von Abtastratenvarianten hinterlegt ist, wobei die Abtastrate ein Parameter in Abhängigkeit von einer Radarantwort ist, sodass die Abtastrate nach Auswertung der Radarantwort gewählt wird.

12. Radarsensoranordnung (1) nach einem der vorhergehenden Ansprüche, wobei
die Antennenanordnung drei Sendeantennen und vier Empfangsantennen aufweist,
wobei
im ersten Betriebsmodus für jede Sendeantenne der Anzahl von Sendeantennen unterschiedliche Chirps für das Ansteuern der Sendeantennen konfiguriert sind, und/oder wobei
im zweiten Betriebsmodus für jede Sendeantenne der Anzahl von Sendeantennen unterschiedliche Chirps für das Ansteuern der Sendeantennen konfiguriert sind.

13. Radarsensoranordnung (1) nach einem der vorhergehenden Ansprüche, wobei
im ersten Betriebsmodus eine erste Chirp-Konfiguration für das Ansteuern der Sendeantennen konfiguriert ist, und
im zweiten Betriebsmodus eine zweite Chirp-Konfiguration für das Ansteuern der Sendeantennen konfiguriert ist.

14. Radarsensoranordnung (1) nach Anspruch 13, wobei die erste Chirp-Konfiguration vorsieht, dass ein Ansteuerungsvorgang mit einer höheren Sendeleistung pro angesteuerter Antenne und einer kleineren Bandbreite der Sendefrequenzen und ein Ansteuerungsvorgang mit einer kleineren Sendeleistung pro angesteuerter Antenne und einer größeren Bandbreite der Sendefrequenzen alternieren.

15. Radarsensoranordnung (1) nach Anspruch 13, wobei die erste Chirp-Konfiguration vorsieht, dass ein erster Ansteuerungsvorgang mit einer ersten Sendeleistung pro angesteuerter Antenne und einer ersten Bandbreite der Sendefrequenzen und ein zweiter Ansteuerungsvorgang mit einer zweiten Sendeleistung pro angesteuerter Antenne und einer zweiten Bandbreite der Sendefrequenzen alternieren, wobei die zweite Sendeleistung Null ist oder nahezu Null Watt ist und die zweite Bandbreite Null ist oder nahezu Null Hz ist.

16. Radarsensoranordnung (1) nach einem der vorhergehenden Ansprüche, wobei der Mikrocontroller (8) eingerichtet ist,
bei Betrieb der Antennenanordnung (2) im Energiesparbetrieb mit der Empfangsschaltung (5) erfasste Radarantworten abzufragen und eine Auswertung durchzuführen,
wobei der Mikrocontroller (8) von dem Energiesparbetrieb in den Erfassungsbetrieb wechselt, wenn die Auswertung das Vorliegen eines vorgegebenen Kriteriums ergibt.

17. Radarsensoranordnung (1) nach Anspruch 16, wobei das vorgegebene Kriterium umfasst, dass
eine Annäherung eines Hindernisses oder eine Annäherung eines Benutzers oder ein Türöffnungswunsch eines Benutzers erkannt worden ist, beispielsweise durch das Übereinstimmen einer erfassten Radarantwort mit einer auf dem Mikrocontroller oder auf einem mit dem Mikrocontroller gekoppelten Speicher hinterlegten empirisch ermittelten charakteristischen Radarantwort.

18. Radarsensoranordnung (1) nach einem der vorhergehenden Ansprüche, **dadurch gekennzeichnet, dass** die Antennenanordnung (2) und die Steuerschaltung (7) mit Mikrocontroller (8) auf einer selben Leiterplatte angeordnet sind.

19. Radarsensoranordnung (1) nach einem der vorhergehenden Ansprüche, **dadurch gekennzeichnet, dass** die Antennenanordnung (2) und die Steuerschaltung (7) mit Mikrocontroller (8) auf einem selben Chip angeordnet sind und ein System-on-a-Chip bilden.

20. Kraftfahrzeug (9), enthaltend eine Radarsensoranordnung nach einem der Ansprüche 1 bis 19 zur Erkennung von Objekten.

21. Kraftfahrzeug (9) nach Anspruch 20, wobei die Radarsensoranordnung in einem Türgriff oder in einer Säule, insbesondere B-Säule (10), oder in einem Designelement angeordnet ist.

22. Kraftfahrzeug (9) nach Anspruch 20 oder nach Anspruch 21, wobei die Radarsensoranordnung mit einem Steuergerät (11) des Kraftfahrzeugs (9) gekoppelt ist, wobei das Kraftfahrzeug (9) ein Keyless-Entry-Fahrzeugzugangssystem zur Identifikation eines Bedieners aufweist, der einen drahtlosen ID-Geber (12) mit sich führt, wobei der Mikrocontroller (8) der Radarsensoranordnung eingerichtet ist, in den Erfassungsbetrieb nur unter der Voraussetzung eintreten zu können, dass der Mikrocontroller (8) während eines vorgegebenen Zeitraums ein Bestätigungssignal seitens des Steuergeräts erhalten hat zur Bestätigung, dass eine erfolgreiche Authentifizierung des in Funkreichweite befindlichen ID-Gebers (12) stattgefunden hat.

## Claims

1. Radar sensor arrangement (1) for detecting objects, wherein the radar sensor arrangement (1) comprises at least:
- an antenna arrangement (2) having
a receiving circuit (5) having a number of receiving antennas (6A, 6B, 6C, 6D) and having
a transmitting circuit (3) having a number of transmitting antennas (4A, 4B, 4C),
- a central control circuit (7), coupled to the receiving circuit (5) and to the transmitting circuit (3), having a microcontroller (8),
wherein the microcontroller (8) is configured to operate the antenna arrangement with one of at least two predefined different operating modes,
wherein a first operating mode is an energy-saving operation and a second operating mode is a detection operation,
wherein the microcontroller (8) is configured
to operate, in the energy-saving operation, the transmitting circuit (3) with a first transmission actuation sequence of the transmitting antennas (4A, 4B, 4C), and
to operate, in the detection operation, the transmitting circuit (3) with a second transmission actuation sequence of the transmitting antennas (4A, 4B, 4C),
wherein the first transmission actuation sequence triggers fewer actuation operations than the second transmission actuation sequence,
**characterized in that** an actuation operation in the first operating mode has a higher transmission power per actuated antenna than an actuation operation in the second operating mode,
wherein a transmission of the signal in the first operating mode and the transmission power in the second operating mode are dimensioned such that, due to the number of actuation operations in the first operating mode, which is lower than is the case for the number of actuation operations in the second operating mode, overall, despite the high-power actuation carried out in the first operating mode, the energy-saving property is achieved in this first operating mode in comparison with the second operating mode.

2. Radar sensor arrangement (1) according to claim 1, wherein the microcontroller (8) is configured, in the energy-saving operation during the first transmission actuation sequence, sequentially, preferably at each actuation time of the transmission actuation sequence, not to actuate at least one of the transmitting antennas (4A, 4B, 4C) of the number of transmitting antennas (4A, 4B, 4C).

3. Radar sensor arrangement (1) according to claim 1 or according to claim 2, wherein the microcontroller (8) is configured, in the energy-saving operation during the first transmission actuation sequence, sequentially to actuate exactly one of the transmitting antennas (4A, 4B, 4C), preferably each of the transmitting antennas in a transmission actuation sequence with an equal number of actuation operations.

4. Radar sensor arrangement (1) according to one of the preceding claims, wherein the microcontroller (8) is configured
to operate, in the energy-saving operation, the receiving circuit (5) with a first reception actuation sequence of the receiving antennas (6A, 6B, 6C, 6D), and
to operate, in the detection operation, the receiving circuit (5) with a second reception actuation sequence of the receiving antennas (6A, 6B, 6C, 6D),
wherein the first reception actuation sequence triggers fewer actuation operations than the second reception actuation sequence.

5. Radar sensor arrangement (1) according to claim 4, wherein the microcontroller (8) is configured, in the energy-saving operation during the first reception actuation sequence, sequentially, preferably at each actuation time of the reception actuation sequence, not to actuate at least one of the receiving antennas (6A, 6B, 6C, 6D) of the number of receiving antennas (6A, 6B, 6C, 6D).

6. Radar sensor arrangement (1) according to claim 4 or according to claim 5, wherein the microcontroller (8) is configured, in the energy-saving operation during the first reception actuation sequence, sequentially to actuate exactly one of the receiving antennas (6A, 6B, 6C, 6D), preferably each of the receiving antennas (6A, 6B, 6C, 6D) in a reception actuation sequence with an equal number of actuation operations.

7. Radar sensor arrangement (1) according to one of the preceding claims, wherein
an actuation operation in the first operating mode has a higher transmission power per actuated antenna than each actuation operation in the second operating mode,
preferably each performed actuation operation in the first operating mode has a higher transmission power per actuated antenna than in the second operating mode.

8. Radar sensor arrangement according to one of the preceding claims, wherein, in the first operating mode, the transmission actuation sequence has at least one high-power actuation, preferably exactly one high-power actuation, in which one, preferably exactly one, transmitting antenna is operated with a higher transmission power per actuated antenna than each actuation operation in the second operating mode provides.

9. Radar sensor arrangement (1) according to one of the preceding claims, wherein
an actuation operation in the first operating mode has a smaller bandwidth of the transmission frequencies than in the second operating mode,
preferably each performed actuation operation in the first operating mode has a smaller bandwidth of the transmission frequencies than in the second operating mode.

10. Radar sensor arrangement (1) according to one of the preceding claims, wherein the sampling rate for sampling the received signal in the first operating mode is smaller than in the second operating mode.

11. Radar sensor arrangement (1) according to one of the preceding claims, wherein a number of sampling rate variants is stored on a storage means of the central control circuit, wherein the sampling rate is a parameter depending on a radar response, such that the sampling rate is selected after evaluation of the radar response.

12. Radar sensor arrangement (1) according to one of the preceding claims, wherein
the antenna arrangement has three transmitting antennas and four receiving antennas,
wherein,
in the first operating mode, different chirps for actuating the transmitting antennas are configured for each transmitting antenna of the number of transmitting antennas, and/or wherein
in the second operating mode, different chirps for actuating the transmitting antennas are configured for each transmitting antenna of the number of transmitting antennas.

13. Radar sensor arrangement (1) according to one of the preceding claims, wherein
in the first operating mode, a first chirp configuration for actuating the transmitting antennas is configured, and
in the second operating mode, a second chirp configuration for actuating the transmitting antennas is configured.

14. Radar sensor arrangement (1) according to claim 13, wherein the first chirp configuration provides that an actuation operation with a higher transmission power per actuated antenna and a smaller bandwidth of the transmission frequencies and an actuation operation with a lower transmission power per actuated antenna and a larger bandwidth of the transmission frequencies alternate.

15. Radar sensor arrangement (1) according to claim 13, wherein the first chirp configuration provides that a first actuation operation with a first transmission power per actuated antenna and a first bandwidth of the transmission frequencies and a second actuation operation with a second transmission power per actuated antenna and a second bandwidth of the transmission frequencies alternate, wherein the second transmission power is zero or nearly zero watts and the second bandwidth is zero or nearly zero Hz.

16. Radar sensor arrangement (1) according to one of the preceding claims, wherein the microcontroller (8) is configured,
during operation of the antenna arrangement (2) in the energy-saving operation, to query radar responses detected with the receiving circuit (5) and to carry out an evaluation,
wherein the microcontroller (8) changes from the energy-saving operation to the detection operation when the evaluation yields the presence of a predefined criterion.

17. Radar sensor arrangement (1) according to claim 16, wherein the predefined criterion comprises that
an approach of an obstacle or an approach of a user or a door-opening request of a user has been detected, for example by the correspondence of a detected radar response with an empirically determined characteristic radar response stored on the microcontroller or on a memory coupled to the microcontroller.

18. Radar sensor arrangement (1) according to one of the preceding claims, **characterized in that** the antenna arrangement (2) and the control circuit (7) having the microcontroller (8) are arranged on a same printed circuit board.

19. Radar sensor arrangement (1) according to one of the preceding claims, **characterized in that** the antenna arrangement (2) and the control circuit (7) having the microcontroller (8) are arranged on a same chip and form a system-on-a-chip.

20. Motor vehicle (9) comprising a radar sensor arrangement according to one of claims 1 to 19 for detecting objects.

21. Motor vehicle (9) according to claim 20, wherein the radar sensor arrangement is arranged in a door handle or in a pillar, in particular B-pillar (10), or in a design element.

22. Motor vehicle (9) according to claim 20 or according to claim 21, wherein the radar sensor arrangement is coupled to a control device (11) of the motor vehicle (9), wherein the motor vehicle (9) has a keyless-entry vehicle access system for identifying an operator who carries with him a wireless ID transmitter (12), wherein the microcontroller (8) of the radar sensor arrangement is configured to be able to enter the detection operation only under the condition that, during a predefined period of time, the microcontroller (8) has received a confirmation signal from the control device for confirming that successful authentication of the ID transmitter (12) located within radio range has taken place.

## Revendications

1. Agencement de capteur radar (1) destiné à la détection d'objets, l'agencement de capteur radar (1) comprenant au moins :
- un agencement d'antennes (2) comprenant
un circuit de réception (5) comprenant un nombre d'antennes de réception (6A, 6B, 6C, 6D) et comprenant
un circuit d'émission (3) comprenant un nombre d'antennes d'émission (4A, 4B, 4C),
- un circuit de commande central (7), couplé au circuit de réception (5) et au circuit d'émission (3), comprenant un microcontrôleur (8),
dans lequel le microcontrôleur (8) est configuré pour faire fonctionner l'agencement d'antennes selon l'un d'au moins deux modes de fonctionnement différents prédéfinis,
dans lequel un premier mode de fonctionnement est un fonctionnement d'économie d'énergie et un deuxième mode de fonctionnement est un fonctionnement de détection,
dans lequel le microcontrôleur (8) est configuré
pour faire fonctionner, dans le fonctionnement d'économie d'énergie, le circuit d'émission (3) avec une première séquence d'activation d'émission des antennes d'émission (4A, 4B, 4C), et
pour faire fonctionner, dans le fonctionnement de détection, le circuit d'émission (3) avec une deuxième séquence d'activation d'émission des antennes d'émission (4A, 4B, 4C),
dans lequel la première séquence d'activation d'émission déclenche moins d'opérations d'activation que la deuxième séquence d'activation d'émission,
**caractérisé en ce qu'**une opération d'activation dans le premier mode de fonctionnement présente une puissance d'émission par antenne commandée plus élevée qu'une opération d'activation dans le deuxième mode de fonctionnement,
dans lequel une émission du signal dans le premier mode de fonctionnement et la puissance d'émission dans le deuxième mode de fonctionnement sont dimensionnées de telle sorte que, en raison du nombre d'opérations d'activation dans le premier mode de fonctionnement, qui est inférieur à ce qui est le cas pour le nombre d'opérations d'activation dans le deuxième mode de fonctionnement, globalement, malgré l'activation haute puissance effectuée dans le premier mode de fonctionnement, la propriété d'économie d'énergie est atteinte dans ce premier mode de fonctionnement par comparaison avec le deuxième mode de fonctionnement.

2. Agencement de capteur radar (1) selon la revendication 1, dans lequel le microcontrôleur (8) est configuré, dans le fonctionnement d'économie d'énergie pendant la première séquence d'activation d'émission, séquentiellement, de préférence à chaque instant d'activation de la séquence d'activation d'émission, pour ne pas activer au moins une des antennes d'émission (4A, 4B, 4C) du nombre d'antennes d'émission (4A, 4B, 4C).

3. Agencement de capteur radar (1) selon la revendication 1 ou selon la revendication 2, dans lequel le microcontrôleur (8) est configuré, dans le fonctionnement d'économie d'énergie pendant la première séquence d'activation d'émission, pour activer séquentiellement exactement une des antennes d'émission (4A, 4B, 4C), de préférence chacune des antennes d'émission dans une séquence d'activation d'émission avec un nombre identique d'opérations d'activation.

4. Agencement de capteur radar (1) selon l'une des revendications précédentes, dans lequel le microcontrôleur (8) est configuré
pour faire fonctionner, dans le fonctionnement d'économie d'énergie, le circuit de réception (5) avec une première séquence d'activation de réception des antennes de réception (6A, 6B, 6C, 6D), et
pour faire fonctionner, dans le fonctionnement de détection, le circuit de réception (5) avec une deuxième séquence d'activation de réception des antennes de réception (6A, 6B, 6C, 6D),
dans lequel la première séquence d'activation de réception déclenche moins d'opérations d'activation que la deuxième séquence d'activation de réception.

5. Agencement de capteur radar (1) selon la revendication 4, dans lequel le microcontrôleur (8) est configuré, dans le fonctionnement d'économie d'énergie pendant la première séquence d'activation de réception, séquentiellement, de préférence à chaque instant d'activation de la séquence d'activation de réception, pour ne pas activer au moins une des antennes de réception (6A, 6B, 6C, 6D) du nombre d'antennes de réception (6A, 6B, 6C, 6D).

6. Agencement de capteur radar (1) selon la revendication 4 ou selon la revendication 5, dans lequel le microcontrôleur (8) est configuré, dans le fonctionnement d'économie d'énergie pendant la première séquence d'activation de réception, pour activer séquentiellement exactement une des antennes de réception (6A, 6B, 6C, 6D), de préférence chacune des antennes de réception (6A, 6B, 6C, 6D) dans une séquence d'activation de réception avec un nombre identique d'opérations d'activation.

7. Agencement de capteur radar (1) selon l'une des revendications précédentes, dans lequel
une opération d'activation dans le premier mode de fonctionnement présente une puissance d'émission par antenne commandée plus élevée que chaque opération d'activation dans le deuxième mode de fonctionnement,
de préférence chaque opération d'activation effectuée dans le premier mode de fonctionnement présente une puissance d'émission par antenne commandée plus élevée que dans le deuxième mode de fonctionnement.

8. Agencement de capteur radar selon l'une des revendications précédentes, dans lequel, dans le premier mode de fonctionnement, la séquence d'activation d'émission présente au moins une activation haute puissance, de préférence exactement une activation haute puissance, dans laquelle une, de préférence exactement une, antenne d'émission est utilisée avec une puissance d'émission par antenne commandée plus élevée que ce que prévoit chaque opération d'activation dans le deuxième mode de fonctionnement.

9. Agencement de capteur radar (1) selon l'une des revendications précédentes, dans lequel
une opération d'activation dans le premier mode de fonctionnement présente une bande passante des fréquences d'émission plus petite que dans le deuxième mode de fonctionnement,
de préférence chaque opération d'activation effectuée dans le premier mode de fonctionnement présente une bande passante des fréquences d'émission plus petite que dans le deuxième mode de fonctionnement.

10. Agencement de capteur radar (1) selon l'une des revendications précédentes, dans lequel la fréquence d'échantillonnage pour échantillonner le signal reçu dans le premier mode de fonctionnement est plus petite que dans le deuxième mode de fonctionnement.

11. Agencement de capteur radar (1) selon l'une des revendications précédentes, dans lequel un nombre de variantes de fréquence d'échantillonnage est enregistré sur un moyen de stockage du circuit de commande central, dans lequel la fréquence d'échantillonnage est un paramètre en fonction d'une réponse radar, de sorte que la fréquence d'échantillonnage est choisie après évaluation de la réponse radar.

12. Agencement de capteur radar (1) selon l'une des revendications précédentes, dans lequel
l'agencement d'antennes présente trois antennes d'émission et quatre antennes de réception,
dans lequel,
dans le premier mode de fonctionnement, des chirps différents pour activer les antennes d'émission sont configurés pour chaque antenne d'émission du nombre d'antennes d'émission, et/ou dans lequel
dans le deuxième mode de fonctionnement, des chirps différents pour activer les antennes d'émission sont configurés pour chaque antenne d'émission du nombre d'antennes d'émission.

13. Agencement de capteur radar (1) selon l'une des revendications précédentes, dans lequel
dans le premier mode de fonctionnement, une première configuration de chirp pour activer les antennes d'émission est configurée, et
dans le deuxième mode de fonctionnement, une deuxième configuration de chirp pour activer les antennes d'émission est configurée.

14. Agencement de capteur radar (1) selon la revendication 13, dans lequel la première configuration de chirp prévoit qu'une opération d'activation avec une puissance d'émission par antenne commandée plus élevée et une bande passante des fréquences d'émission plus petite et une opération d'activation avec une puissance d'émission par antenne commandée plus petite et une bande passante des fréquences d'émission plus grande alternent.

15. Agencement de capteur radar (1) selon la revendication 13, dans lequel la première configuration de chirp prévoit qu'une première opération d'activation avec une première puissance d'émission par antenne commandée et une première bande passante des fréquences d'émission et une deuxième opération d'activation avec une deuxième puissance d'émission par antenne commandée et une deuxième bande passante des fréquences d'émission alternent, dans lequel la deuxième puissance d'émission est nulle ou quasiment nulle watt et la deuxième bande passante est nulle ou quasiment nulle Hz.

16. Agencement de capteur radar (1) selon l'une des revendications précédentes, dans lequel le microcontrôleur (8) est configuré,
lors du fonctionnement de l'agencement d'antennes (2) dans le fonctionnement d'économie d'énergie, pour interroger des réponses radar détectées avec le circuit de réception (5) et pour effectuer une évaluation,
dans lequel le microcontrôleur (8) passe du fonctionnement d'économie d'énergie au fonctionnement de détection lorsque l'évaluation donne la présence d'un critère prédéfini.

17. Agencement de capteur radar (1) selon la revendication 16, dans lequel le critère prédéfini comprend le fait que
une approche d'un obstacle ou une approche d'un utilisateur ou un souhait d'ouverture de porte d'un utilisateur a été détecté, par exemple par la concordance d'une réponse radar détectée avec une réponse radar caractéristique déterminée empiriquement, enregistrée sur le microcontrôleur ou sur une mémoire couplée au microcontrôleur.

18. Agencement de capteur radar (1) selon l'une des revendications précédentes, **caractérisé en ce que** l'agencement d'antennes (2) et le circuit de commande (7) comprenant le microcontrôleur (8) sont agencés sur une même carte de circuit imprimé.

19. Agencement de capteur radar (1) selon l'une des revendications précédentes, **caractérisé en ce que** l'agencement d'antennes (2) et le circuit de commande (7) comprenant le microcontrôleur (8) sont agencés sur une même puce et forment un système sur puce.

20. Véhicule automobile (9), contenant un agencement de capteur radar selon l'une des revendications 1 à 19 destiné à la détection d'objets.

21. Véhicule automobile (9) selon la revendication 20, dans lequel l'agencement de capteur radar est agencé dans une poignée de porte ou dans un montant, en particulier un montant B (10), ou dans un élément de design.

22. Véhicule automobile (9) selon la revendication 20 ou selon la revendication 21, dans lequel l'agencement de capteur radar est couplé à un appareil de commande (11) du véhicule automobile (9), dans lequel le véhicule automobile (9) présente un système d'accès au véhicule sans clé pour l'identification d'un opérateur qui porte sur lui un émetteur d'identification sans fil (12), dans lequel le microcontrôleur (8) de l'agencement de capteur radar est configuré pour ne pouvoir entrer dans le fonctionnement de détection qu'à la condition que le microcontrôleur (8) ait reçu, pendant une période de temps prédéfinie, un signal de confirmation de la part de l'appareil de commande pour confirmer qu'une authentification réussie de l'émetteur d'identification (12) se trouvant à portée radio a eu lieu.
